# FASCICULE DE BREVET EUROPEEN

(11) **EP 3 332 530 B1**
(45) Date de publication et mention de la délivrance du brevet: **04.12.2019**
(21) Numéro de dépôt: 16757317.9
(22) Date de dépôt: 02.08.2016
(51) Int. Cl.: H04L 29/06, H04W 12/06, H04W 76/10, H04W 88/16

(54) **PROCEDES ET DISPOSITIFS D'IDENTIFICATION D'UN SERVEUR D'AUTHENTIFICATION**
VERFAHREN UND EINRICHTUNGEN ZUR IDENTIFIZIERUNG EINES AUTHENTIFIZIERUNGSSERVER
METHODS AND DEVICES FOR IDENTIFYING AN AUTHENTICATION SERVER

(30) Priorité: 05.08.2015 FR 1557564
(43) Date de publication de la demande: 13.06.2018
(73) Titulaire: Orange, 75015 Paris (FR)
(72) Inventeur: VARON, Marc, 35000 Rennes (FR); MORAND, Lionel, 92240 Malakoff (FR); BOURNELLE, Julien, 75012 Paris (FR)
(86) Numéro de dépôt international: PCT/FR2016/052008
(87) Numéro de publication internationale: WO 2017/021649

(56) Documents cités:
- EP-A1- 2 741 530
- WO-A1-2016/179800
- US-A1- 2012 096 529
- "3rd Generation Partnership Project; Technical Specification Group Core Network and Terminals; Evolved Packet System (EPS); 3GPP EPS AAA interfaces (Release 13)", 3GPP STANDARD; 3GPP TS 29.273, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V13.0.0, 24 juin 2015 (2015-06-24), pages 1-162, XP050966143,

## Description

### 1. Domaine de l'invention

L'invention se situe dans le domaine des réseaux d'accès IP, et plus particulièrement dans le domaine de la mobilité des terminaux entre réseaux d'accès IP appartenant et n'appartenant pas au monde mobile 3GPP.

### 2. Etat de la technique antérieure

Dans les réseaux d'accès dits non-3GPP, par exemple les réseaux d'accès WiFi, si un terminal UE souhaite accéder aux mêmes services que lorsqu'il se trouve dans un réseau d'accès 3GPP, il doit s'attacher à une passerelle d'accès de ce réseau d'accès non-3GPP. Cette passerelle d'accès demande à un serveur d'authentification, aussi appelé serveur AAA, d'authentifier le terminal UE sur la base d'un identifiant de l'utilisateur du terminal UE. Le serveur AAA contacte un serveur dit HSS (Home Subscriber Server, ou serveur d'abonnement de domicile) pour récupérer les informations nécessaires à l'authentification de l'utilisateur du terminal UE et les transmettre à la passerelle d'accès qui les transmet à son tour au terminal UE pour qu'il puisse s'authentifier. Une fois la réponse de l'utilisateur du terminal UE à la demande d'authentification reçue, celle-ci est transmise au serveur AAA pour vérification. Une fois l'authentification de l'utilisateur du terminal UE réussie, le serveur AAA s'enregistre auprès du serveur HSS pour indiquer qu'il est en charge de la session d'accès du terminal UE et récupérer les informations permettant de connaitre les droits d'accès au service dont bénéficie l'utilisateur. Le serveur d'authentification, en plus d'authentifier l'utilisateur et d'autoriser l'attachement de son terminal à la passerelle d'accès, peut indiquer également à la passerelle d'accès quel est l'équipement auquel elle doit se rattacher pour permettre l'accès du terminal à un réseau de paquets tel que l'Internet ou IMS. Cet équipement s'appelle une passerelle d'ancrage, aussi appelée PDN Gateway, ou PGW.

Si l'identité de la passerelle d'ancrage PGW n'est pas fournie par le serveur d'authentification dans la réponse d'authentification renvoyée à la passerelle d'accès, c'est à la passerelle d'accès de découvrir l'identité de la PGW, cette découverte pouvant se faire sur la base d'informations configurées statiquement dans la passerelle d'accès (adresses FQDN ou adresses IP des passerelles d'ancrage PGW à contacter) ou via des informations renvoyées par un serveur DNS (Domain Name Server) interrogé par la passerelle d'accès.

Lorsque la passerelle d'accès demande à la passerelle d'ancrage l'établissement d'une connexion pour l'utilisateur du terminal UE identifié par son identifiant, la passerelle d'ancrage doit s'enregistrer auprès du serveur d'authentification. La passerelle d'ancrage envoie donc une requête d'enregistrement à un serveur d'authentification par défaut, qui n'est pas toujours le même qui a servi à authentifier le terminal pour la passerelle d'accès, en indiquant l'ouverture d'une connexion pour l'utilisateur du terminal UE identifié par son identifiant.

Le serveur d'authentification contacté par la passerelle d'ancrage envoie une requête d'enregistrement pour l'utilisateur du terminal UE, vers le serveur HSS, qui connait les utilisateurs et les serveurs d'authentification dont ils dépendent. Si l'utilisateur du terminal UE, identifié par l'identifiant contenu dans la requête, n'a pas été pris en charge par ce serveur d'authentification mais par un autre, le serveur HSS renvoie l'identité de cet autre serveur dans la réponse à la requête envoyée par le serveur d'authentification contacté par la passerelle d'ancrage. Dans ce cas, le serveur d'authentification renvoie une indication de redirection en réponse à la requête d'enregistrement de la passerelle d'ancrage, cette réponse contenant l'identité du serveur d'authentification transmise par le serveur HSS. La passerelle d'ancrage peut alors réémettre une requête d'enregistrement vers le serveur d'authentification en charge de la session d'accès pour cet utilisateur, en utilisant l'identité de serveur reçue dans l'indication de redirection.

Cette procédure de redirection arrive de plus en plus fréquemment, en raison de la multiplication des opérateurs, des terminaux, de leur mobilité entre domaines d'opérateurs différents, de leur mobilité entre les domaines 3GPP et les domaines non 3GPP, et de l'augmentation du nombre de serveurs d'authentification dans un domaine donné.

Ceci provoque une augmentation substantielle de la signalisation entre passerelles d'ancrage, serveurs d'authentification et serveurs HSS, qui peut être à l'origine de ralentissements et de dysfonctionnements des réseaux.

Le document 3GPP TS 29.273 V13.0.0, "3rd Generation Partnership Project; Technical Specification Group Core Network and Terminais; Evolved Packet System (EPS); 3GPP EPS AAA interfaces (Release 13)", publié en juin 2015, indique la découverte, par la passerelle d'ancrage, du serveur d'authentification ayant authentifié l'utilisateur, au moyen de redirections, ce qui ne résout pas ce problème.

Un des buts de l'invention est de remédier à ces inconvénients de l'état de la technique.

### 3. Exposé de l'invention

L'invention vient améliorer la situation à l'aide d'un procédé d'autorisation d'un utilisateur authentifié d'un terminal de communications, le terminal étant destiné à se connecter à un réseau de commutation par paquets via une passerelle d'accès dans un réseau courant à laquelle le terminal est attaché, le procédé étant mis en œuvre par un serveur d'authentification courant dans le réseau courant et comprenant les étapes suivantes :
- réception d'une requête d'autorisation d'utilisateur en provenance de la passerelle d'accès, comprenant un identifiant de l'utilisateur,
- émission d'une réponse d'autorisation d'utilisateur à destination de la passerelle d'accès, comprenant des paramètres d'autorisation de l'utilisateur,
la réponse d'autorisation d'utilisateur comprenant en outre un identifiant unique d'un serveur d'authentification ayant authentifié l'utilisateur.

Une fois l'utilisateur authentifié, par exemple par une procédure d'attachement, la passerelle d'accès demande une autorisation pour l'utilisateur et le type de réseau de commutation par paquets qu'il souhaite accéder, identifié par un paramètre dit APN (Access Point Name, ou nom de point d'accès en anglais), comme par exemple un réseau IMS.

Une fois l'utilisateur autorisé, la passerelle d'accès peut demander l'établissement d'une connexion entre le terminal de l'utilisateur et une passerelle dite d'ancrage qui est connectée au réseau de commutation par paquets.

Grâce au procédé d'autorisation selon l'invention, contrairement à la technique antérieure, la passerelle d'accès est en mesure d'indiquer à la passerelle d'ancrage le serveur d'authentification auprès duquel elle doit s'enregistrer, qui doit être le serveur d'authentification qui a été utilisé pour authentifier l'utilisateur. En effet selon l'invention l'identifiant unique de ce serveur d'authentification est comprise dans la réponse d'authentification.

Dans un premier cas, le terminal l'utilisateur n'est pas en situation d'itinérance, mais il peut exister plusieurs serveurs d'authentification déployés dans son réseau, et le serveur d'authentification contacté par la passerelle d'accès, qui effectue l'autorisation, n'est pas forcément le même que celui que contacterait par défaut la passerelle d'ancrage.

Dans un deuxième cas, le terminal est en situation d'itinérance dans un réseau d'accès visité qui n'est pas son réseau d'accès habituel (qui n'est pas son "home network", en anglais), le serveur d'authentification courant attribué à la passerelle d'accès est un serveur d'authentification lié au réseau d'accès visité, et la requête d'autorisation doit alors être redirigée par le serveur d'authentification courant vers le serveur d'authentification du réseau habituel.

Dans un cas comme dans l'autre, le serveur d'authentification courant récupère l'identifiant du serveur d'authentification qui a authentifié l'utilisateur, qui peut être le sien propre ou celui d'un autre serveur, selon le cas, et le communique dans sa réponse à la passerelle d'accès. Ainsi, la passerelle d'accès connait cet identifiant, contrairement à la technique antérieure où la passerelle d'accès ne peut déduire cet identifiant que pour le serveur d'autorisation courant, qui n'est pas forcément le bon.

La passerelle d'accès peut donc indiquer cet identifiant à la passerelle d'ancrage qui lui est attribuée pour ce terminal d'utilisateur, ce qui évite à celle-ci de s'adresser à un autre serveur d'authentification pour s'enregistrer et de provoquer une redirection de l'enregistrement vers un serveur HSS, d'attendre un identifiant d'un bon serveur d'authentification, puis de recommencer l'enregistrement.

Les protocoles en usage au 3GPP ne prévoient pas d'inclure l'identifiant du bon serveur s'authentification dans la réponse d'autorisation, car soit la passerelle d'accès s'est adressé au bon serveur auquel cas elle est censé connaitre son identifiant, soit la passerelle d'accès ne connait pas le bon serveur car le terminal est en situation d'itinérance et des mécanismes de redirection sont prévus dans ce cas-là. De plus, les protocoles en usage au 3GPP ne distinguent pas entre eux plusieurs serveurs d'authentification pour un même réseau d'opérateur. La solution selon l'invention, qui est d'inclure l'identifiant du bon serveur d'authentification dans la réponse d'authentification à la passerelle d'accès va donc à l'encontre des préjugés de l'homme du métier.

L'identifiant du bon serveur d'authentification est unique, en ce sens qu'il permet à la passerelle d'ancrage d'y adresser une requête directement, sans passer par un équipement tiers pour obtenir un complément d'adresse, comme par exemple un serveur DNS. Ce peut être un identifiant permettant de distinguer de façon unique le serveur d'authentification, ou ce peut être un identifiant d'une connexion unique vers ce serveur.

L'identifiant unique peut par exemple prendre l'un des formats suivants:
- une adresse IP, éventuellement combinée à un numéro de port si plusieurs sont présents à cette adresse IP,
- un nom de réseau de type FQDN (Fully Qualified Domain Name, ou nom de domaine complètement qualifié, en anglais); dans le DNS, un FQDN est un nom de domaine qui révèle la position absolue d'un nœud dans l'arborescence DNS en indiquant tous les domaines de niveau supérieur jusqu'à la racine,
- une identité Diameter, éventuellement combinée avec un nom de domaine Diameter; Diameter est un protocole d'authentification défini par le RFC 3588, successeur du protocole RADIUS.

Selon un aspect de l'invention, l'utilisateur a été authentifié par le serveur d'authentification courant.

Grâce à cet aspect, la passerelle d'accès reçoit le bon identifiant lorsque le serveur d'authentification courant est celui qui a authentifié l'utilisateur, ce qui est le cas lorsque le terminal n'est pas en situation d'itinérance ou d'éloignement de son réseau habituel, et lorsque le serveur d'authentification que la passerelle d'accès connait par défaut coïncide avec celui qui est en mesure d'autoriser l'utilisateur.

Selon un aspect de l'invention, l'utilisateur a été authentifié par un autre serveur d'authentification, la requête d'autorisation d'utilisateur reçue étant transmise à cet autre serveur d'authentification.

Grâce à cet aspect, la passerelle d'accès reçoit le bon identifiant même lorsque le serveur d'authentification courant n'est pas celui qui a authentifié l'utilisateur. C'est le cas lorsque le terminal est en situation d'itinérance, ou plus généralement, sans qu'il n'y ait nécessairement itinérance entre deux opérateurs, l'un étant "visité" et l'autre "de domicile", lorsque le réseau courant est un réseau local visité par l'utilisateur qui n'est pas le réseau distant (par rapport au réseau courant ou local) où il se connecte habituellement.

Il est supposé dans ce mode que le serveur d'authentification que la passerelle d'accès connait par défaut, même s'il n'est pas celui qui est en mesure d'autoriser l'utilisateur, est en mesure de rediriger la requête d'authentification vers le serveur d'authentification du réseau habituel de l'utilisateur.

Dans la suite du document, "réseau visité" et "réseau local" ont la même signification. Similairement, "réseau de domicile", "réseau habituel" et "réseau distant" ont la même signification.

Dans ce mode correspondant au deuxième cas présenté plus haut, le réseau courant est le réseau visité, alors que dans un mode correspondant au premier cas présenté plus haut, il n'y a pas de distinction entre réseau visité et réseau de domicile, et donc qu'un seul réseau, aussi appelé réseau courant.

Selon un aspect de l'invention, le serveur d'authentification courant est dans un réseau dit visité par le terminal et l'autre serveur d'authentification ayant authentifié l'utilisateur est dans un réseau dit de domicile du terminal, le procédé d'autorisation comprend en outre une étape d'obtention d'une information relative à une autorisation d'allouer une passerelle dite d'ancrage située dans le réseau visité et destinée à connecter le terminal d'utilisateur au réseau de commutation par paquets, et la réponse d'autorisation d'utilisateur comprend également une adresse unique du serveur d'authentification courant.

Dans certains cas, le réseau courant, c'est-à-dire le réseau visité, peut être autorisé par le réseau de domicile de l'utilisateur à allouer une de ses passerelles d'ancrage plutôt que d'utiliser une passerelle d'ancrage dans le réseau de domicile. Cette autorisation peut être comprise dans une réponse reçue par le serveur d'authentification courant, suite à la transmission de la requête d'autorisation d'utilisateur à l'autre serveur d'authentification.

La passerelle d'ancrage doit alors, comme précédemment, s'enregistrer auprès du serveur d'authentification ayant authentifié l'utilisateur dans le réseau de domicile, mais elle doit en plus le faire en routant sa requête au travers du serveur d'authentification de son propre réseau, entre autres pour des raisons de suivi et de comptabilité, ou pour l'application d'une politique spécifique du réseau visité.

Grâce à cet aspect, la passerelle d'accès reçoit non seulement la bonne adresse du serveur d'authentification ayant authentifié l'utilisateur mais également celle du serveur d'authentification par lequel elle doit obligatoirement faire router sa requête d'enregistrement. Ceci évite les signalisations supplémentaires qui seraient dues à la redirection de la requête d'enregistrement par un serveur d'authentification associé par défaut à la passerelle d'ancrage, afin qu'elle soit routée correctement.

L'invention concerne aussi un procédé de connexion d'un terminal d'un utilisateur à une passerelle d'ancrage connectée à un réseau de commutation par paquets, le procédé étant mis en œuvre par une passerelle d'accès à laquelle est attaché le terminal et comprenant les étapes suivantes :
- émission d'une requête d'autorisation d'utilisateur comprenant un identifiant de l'utilisateur, à destination d'un serveur d'authentification courant,
- réception d'une réponse d'autorisation d'utilisateur en provenance du serveur d'authentification courant,
- émission d'une requête de connexion vers la passerelle d'ancrage, destinée à connecter le terminal au réseau de commutation par paquets,
la réponse d'autorisation d'utilisateur reçue comprenant un identifiant unique d'un serveur d'authentification ayant authentifié l'utilisateur, cet identifiant étant compris dans la requête de connexion émise.

Grâce au procédé de connexion selon l'invention, contrairement à la technique antérieure, la passerelle d'ancrage est en mesure de s'enregistrer auprès du serveur d'authentification qui a été utilisé pour authentifier l'utilisateur, car son identifiant est compris dans la requête de connexion émise par la passerelle d'accès vers la passerelle d'ancrage.

La passerelle d'ancrage évite donc de s'adresser à un serveur d'authentification par défaut pour s'enregistrer, qui n'est pas le bon, et évite de provoquer une redirection de l'enregistrement vers un serveur HSS, d'attendre un identifiant du bon serveur d'authentification, puis de recommencer l'enregistrement.

Les protocoles en usage au 3GPP ne prévoient pas d'inclure l'identifiant du bon serveur s'authentification dans la requête de connexion, car soit le terminal n'est pas en situation d'itinérance et la passerelle d'ancrage s'adresse à son serveur par défaut, auquel cas elle est censé connaitre son identifiant, soit le terminal est en situation d'itinérance et la passerelle d'ancrage ne connait pas le bon serveur d'authentification et des mécanismes de redirection sont prévus dans ce cas-là. La solution selon l'invention, qui est d'inclure l'identifiant du bon serveur d'authentification dans la requête de connexion à la passerelle d'ancrage va donc à l'encontre des préjugés de l'homme du métier.

Le serveur d'authentification courant peut être celui qui authentifie l'utilisateur. Dans ce premier cas, présenté plus haut, l'identifiant compris dans la réponse d'autorisation et dans la requête de connexion est celui du serveur d'authentification courant.

Le serveur d'authentification courant peut être dans le réseau visité et le serveur qui autorise l'utilisateur peut être dans le réseau domicile. C'est le deuxième cas présenté plus haut, où par exemple le terminal est en itinérance. Dans ce cas l'identifiant compris dans la réponse d'autorisation et dans la requête de connexion est celui d'un autre serveur d'authentification, situé dans le réseau domicile, et non dans le réseau visité.

Selon un aspect de l'invention, la réponse d'autorisation d'utilisateur reçue comprend en outre un identifiant unique du serveur d'authentification courant, et cet identifiant est aussi compris dans la requête de connexion émise.

Comme expliqué plus haut, dans certains cas, le réseau courant, c'est-à-dire le réseau visité, peut être autorisé par le réseau de domicile de l'utilisateur à allouer une de ses passerelles d'ancrage plutôt que d'utiliser une passerelle d'ancrage dans le réseau de domicile. La passerelle d'ancrage doit alors, comme précédemment, s'enregistrer auprès du serveur d'authentification ayant authentifié l'utilisateur dans le réseau de domicile, mais elle doit en plus le faire en routant sa requête d'enregistrement au travers du serveur d'authentification de son propre réseau, pour les raisons invoquées plus haut.

Grâce à cet aspect, la passerelle d'ancrage reçoit de la passerelle d'accès non seulement le bon identifiant du serveur d'authentification ayant authentifié l'utilisateur mais également celui du serveur d'authentification par lequel elle doit obligatoirement faire router sa requête d'enregistrement.

Selon un aspect de l'invention, la réponse d'autorisation d'utilisateur reçue comprend en outre un identifiant unique du serveur d'authentification courant, et un paramètre d'autorisation relatif à la sélection d'une passerelle d'ancrage dans un réseau visité par le terminal, dont la réception déclenche une étape de sélection entre une passerelle d'ancrage dans un réseau visité par le terminal ou une passerelle d'ancrage dans un réseau de domicile du terminal, le serveur d'authentification courant étant dans le réseau visité et le serveur d'authentification ayant authentifié l'utilisateur étant dans le réseau de domicile.

Lorsque la passerelle d'accès reçoit les identifiants de deux serveurs d'authentification différents, et qu'elle a de plus reçu l'autorisation de sélectionner une passerelle d'ancrage dans le réseau visité, elle peut alors décider de le faire ou non. Si elle décide de sélectionner une passerelle d'ancrage dans le réseau visité, à l'aide d'une procédure connue telle qu'une requête DNS dont la réponse peut dépendre de l'APN demandé par l'utilisateur, la passerelle d'accès sait que la passerelle d'ancrage pourra recevoir d'elle non seulement le bon identifiant du serveur d'authentification ayant authentifié l'utilisateur, mais également celui du serveur d'authentification par lequel elle doit obligatoirement faire router sa requête d'enregistrement.

Selon un aspect de l'invention, la requête de connexion émise comprend en outre l'identifiant unique du serveur d'authentification courant, si la passerelle d'ancrage est sélectionnée dans le réseau visité.

Grâce à cet aspect, la passerelle d'ancrage dans le réseau visité est en mesure de router sa requête d'enregistrement au travers du serveur d'authentification de son propre réseau.

L'invention concerne aussi un procédé d'enregistrement d'une passerelle d'ancrage destinée à connecter un terminal d'un utilisateur à un réseau de commutation par paquets, comprenant les étapes suivantes :
- réception d'une requête de connexion pour le terminal, en provenance d'une passerelle d'accès à laquelle est attaché le terminal,
- émission d'une requête d'enregistrement vers un serveur d'authentification ayant préalablement authentifié l'utilisateur,
la requête de connexion reçue comprenant un identifiant unique du serveur d'authentification ayant préalablement authentifié l'utilisateur.

Grâce au procédé d'enregistrement selon l'invention, contrairement à la technique antérieure, la passerelle d'ancrage est en mesure de s'enregistrer immédiatement auprès du serveur d'authentification qui a été utilisé pour authentifier l'utilisateur, car son identifiant est compris dans la requête de connexion reçue de la passerelle d'accès par la passerelle d'ancrage.

Selon un aspect de l'invention, la passerelle d'accès et la passerelle d'ancrage sont dans un réseau visité par le terminal, et la requête de connexion reçue comprend en outre un identifiant unique d'un autre serveur d'authentification dans le réseau visité, au travers duquel la requête d'enregistrement émise est routée.

Si la connexion est établie selon le procédé de connexion selon l'invention précédemment décrit, le serveur d'authentification du réseau visité est le premier serveur d'authentification contacté par la passerelle d'accès lors d'une phase préalable d'authentification et d'autorisation de l'utilisateur.

Grâce à cet aspect, la passerelle d'ancrage, lorsqu'elle est sélectionnée dans le réseau visité, est en mesure de router sa requête d'enregistrement au travers du bon serveur d'authentification dans son propre réseau.

Selon un aspect de l'invention, un identifiant de serveur d'authentification utilise un format parmi les suivants :
- une adresse IP, éventuellement combinée à un numéro de port si plusieurs ports sont présents à cette adresse IP,
- un nom de réseau de type FQDN.

Avantageusement, ces formats d'identifiant, contrairement à un identifiant de type Diameter qui désigne obligatoirement l'équipement de destination finale d'un échange Diameter, peuvent désigner un équipement intermédiaire, ou "en coupure", au travers duquel peut donc être routé un message avant d'atteindre sa destination finale.

L'invention concerne aussi un dispositif d'autorisation d'un utilisateur authentifié d'un terminal de communications, le terminal étant destiné à se connecter à un réseau de commutation par paquets via une passerelle d'accès dans un réseau courant à laquelle le terminal est attaché, le dispositif étant mis en œuvre par un serveur d'authentification courant dans le réseau courant et comprenant les modules suivants :
- réception d'une requête d'autorisation d'utilisateur en provenance de la passerelle d'accès, comprenant un identifiant de l'utilisateur,
- émission d'une réponse d'autorisation d'utilisateur à destination de la passerelle d'accès, comprenant des paramètres d'autorisation de l'utilisateur, et un identifiant unique d'un serveur d'authentification ayant authentifié l'utilisateur,
- si le serveur d'authentification courant est dans un réseau dit visité par le terminal, et si l'utilisateur a été authentifié par un autre serveur d'authentification dans un réseau dit de domicile du terminal, un module de transmission de la requête d'autorisation vers l'autre serveur d'authentification, un module d'obtention d'une information relative à une autorisation d'allouer une passerelle dite d'ancrage située dans le réseau visité et destinée à connecter le terminal d'utilisateur au réseau de commutation par paquets, et un module d'inclusion dans la réponse d'autorisation d'utilisateur d'une adresse unique du serveur d'authentification courant.

Ce dispositif est apte à mettre en œuvre dans tous ses modes de réalisation le procédé d'autorisation qui vient d'être décrit.

L'invention concerne aussi un dispositif de connexion d'un terminal d'un utilisateur à une passerelle d'ancrage connectée à un réseau de commutation par paquets, le dispositif étant mis en œuvre par une passerelle d'accès à laquelle est attaché le terminal et comprenant les modules suivants :
- émission d'une requête d'autorisation d'utilisateur comprenant un identifiant de l'utilisateur, à destination d'un serveur d'authentification courant,
- réception d'une réponse d'autorisation d'utilisateur en provenance du serveur d'authentification courant, comprenant un identifiant unique d'un serveur d'authentification ayant authentifié l'utilisateur,
- émission d'une requête de connexion vers la passerelle d'ancrage, destinée à connecter le terminal au réseau de commutation par paquets, comprenant l'identifiant unique du serveur d'authentification ayant authentifié l'utilisateur.

Ce dispositif est apte à mettre en œuvre dans tous ses modes de réalisation le procédé de connexion qui vient d'être décrit.

L'invention concerne aussi un dispositif d'enregistrement d'une passerelle d'ancrage destinée à connecter un terminal d'un utilisateur à un réseau de commutation par paquets, comprenant les modules suivants :
- réception d'une requête de connexion pour le terminal, en provenance d'une passerelle d'accès à laquelle est attaché le terminal, comprenant un identifiant unique du serveur d'authentification ayant préalablement authentifié l'utilisateur,
- émission d'une requête d'enregistrement vers le serveur d'authentification ayant préalablement authentifié l'utilisateur.

Ce dispositif est apte à mettre en œuvre dans tous ses modes de réalisation le procédé d'enregistrement qui vient d'être décrit.

L'invention concerne aussi un système d'identification de serveurs d'authentification comprenant un dispositif d'autorisation, un dispositif de connexion et un dispositif d'enregistrement tels que ceux qui viennent d'être décrits.

Grâce à ce système d'identification, un serveur d'ancrage obtient toujours l'identifiant du ou des bons serveurs d'authentification auprès duquel ou desquels il doit s'enregistrer lorsqu'il reçoit une demande de connexion de la part d'une passerelle d'accès pour un terminal d'utilisateur, et ce même si ce terminal est en situation d'itinérance dans un réseau visité, que la passerelle d'accès soit dans le réseau visité ou dans le réseau de domicile de l'utilisateur. Contrairement à la technique antérieure, il n'est pas nécessaire que la passerelle d'ancrage découvre elle-même ce ou ces identifiants par de la signalisation spécifique.

L'invention concerne aussi un programme d'ordinateur comprenant des instructions pour la mise en œuvre des étapes du procédé d'autorisation qui vient d'être décrit, lorsque ce programme est exécuté par un processeur.

L'invention concerne aussi un programme d'ordinateur comprenant des instructions pour la mise en œuvre des étapes du procédé de connexion qui vient d'être décrit, lorsque ce programme est exécuté par un processeur.

L'invention concerne aussi un programme d'ordinateur comprenant des instructions pour la mise en œuvre des étapes du procédé d'enregistrement qui vient d'être décrit, lorsque ce programme est exécuté par un processeur.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi, pour chacun des programmes d'ordinateur mentionnés ci-dessus, un support d'informations lisible par un ordinateur, et comportant des instructions dun programme d'ordinateur respectif.

Le support d'informations en question peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

L'invention concerne aussi un procédé alternatif d'autorisation d'un utilisateur authentifié d'un terminal de communications, le terminal étant destiné à se connecter à un réseau de commutation par paquets via une passerelle d'accès dans un réseau courant à laquelle le terminal est attaché, le procédé étant mis en œuvre par un serveur d'authentification courant dans le réseau courant et comprenant les étapes suivantes :
- réception d'une requête d'autorisation d'utilisateur en provenance de la passerelle d'accès, comprenant un identifiant de l'utilisateur,
- émission d'une réponse d'autorisation d'utilisateur à destination de la passerelle d'accès, comprenant des paramètres d'autorisation de l'utilisateur,
la réponse d'autorisation d'utilisateur comprenant en outre un identifiant unique du serveur d'authentification courant.

Dans ce procédé alternatif et ceux qui suivent, le terminal est en situation d'itinérance dans un réseau visité. Dans le réseau visité, selon un aspect de ces procédés alternatifs, le serveur d'authentification courant peut être remplacé par un simple équipement dit "proxy", du moment qu'il soit en coupure de la signalisation entre la passerelle d'accès dans le réseau visité et le serveur d'authentification du réseau domicile ayant authentifié l'utilisateur.

La réponse d'autorisation d'utilisateur comprend l'identifiant du serveur d'authentification courant (ou du proxy), qui n'est pas celui qui a authentifié l'utilisateur. En effet, il est suffisant que la passerelle d'accès ne connaisse que l'identifiant du serveur d'authentification courant (ou du proxy), car il est toujours possible pour une passerelle d'ancrage de contacter le serveur d'authentification du réseau domicile ayant authentifié l'utilisateur, à l'aide de l'identifiant de l'utilisateur.

Un avantage est de permettre au serveur d'authentification courant (ou au proxy) du réseau visité d'être en coupure de toute la signalisation relative à un même utilisateur entre le réseau visité, c'est-à-dire la passerelle d'accès ou la passerelle d'ancrage, et le réseau domicile, c'est-à-dire le serveur d'authentification qui a authentifié l'utilisateur.

Le procédé alternatif d'autorisation qui vient d'être décrit collabore avec les procédés alternatifs de connexion et d'enregistrement qui sont décrits ci-dessous, afin de procurer cet avantage.

L'invention concerne aussi un procédé alternatif de connexion d'un terminal d'un utilisateur à une passerelle d'ancrage connectée à un réseau de commutation par paquets, le procédé étant mis en œuvre par une passerelle d'accès à laquelle est attaché le terminal et comprenant les étapes suivantes :
- émission d'une requête d'autorisation d'utilisateur comprenant un identifiant de l'utilisateur, à destination d'un serveur d'authentification courant,
- réception d'une réponse d'autorisation d'utilisateur en provenance du serveur d'authentification courant,
- émission d'une requête de connexion vers la passerelle d'ancrage, destinée à connecter le terminal au réseau de commutation par paquets,
la réponse d'autorisation d'utilisateur reçue comprenant un identifiant unique du serveur d'authentification courant, cet identifiant étant compris dans la requête de connexion émise.

La réponse d'autorisation d'utilisateur et la requête de connexion comprennent l'identifiant du serveur d'authentification courant (ou du proxy), même s'il n'est pas celui qui a authentifié l'utilisateur.

L'invention concerne aussi un procédé alternatif d'enregistrement d'une passerelle d'ancrage destinée à connecter un terminal d'un utilisateur à un réseau de commutation par paquets, comprenant les étapes suivantes :
- réception d'une requête de connexion pour le terminal, en provenance d'une passerelle d'accès à laquelle est attaché le terminal,
- émission d'une requête d'enregistrement vers un serveur d'authentification ayant préalablement authentifié l'utilisateur,
la requête de connexion reçue comprenant un identifiant unique d'un serveur d'authentification dit courant, vers lequel la passerelle d'accès a préalablement émis une requête d'autorisation d'utilisateur.

La requête de connexion comprend l'identifiant du serveur d'authentification courant (ou du proxy), même s'il n'est pas celui qui a authentifié l'utilisateur.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique une vue d'ensemble des éléments mettant en œuvre l'invention, selon un premier mode de réalisation,
- la figure 2 présente de façon schématique une vue d'ensemble des éléments mettant en œuvre l'invention, selon un deuxième mode de réalisation,
- la figure 3 présente de façon schématique une vue d'ensemble des éléments mettant en œuvre l'invention, selon un troisième mode de réalisation,
- la figure 4 présente les étapes des procédés d'autorisation, de connexion et d'enregistrement, selon le premier mode de réalisation de l'invention,
- la figure 5 présente les étapes des procédés d'autorisation, de connexion et d'enregistrement, selon le deuxième mode de réalisation de l'invention,
- la figure 6 présente les étapes des procédés d'autorisation, de connexion et d'enregistrement, selon le troisième mode de réalisation de l'invention,
- la figure 7 présente un exemple de structure d'un dispositif d'autorisation, selon un aspect de l'invention,
- la figure 8 présente un exemple de structure d'un dispositif de connexion, selon un aspect de l'invention,
- la figure 9 présente un exemple de structure d'un dispositif d'enregistrement, selon un aspect de l'invention.

### 5. Description détaillée d'au moins un mode de réalisation de l'invention

Dans la suite de la description, on présente des exemples de plusieurs modes de réalisation de l'invention se basant sur l'architecture de réseau telle que décrite par la norme 3GPP TS 23.402 (Release 13), mais l'invention s'applique également à d'autres réseaux d'architecture différente, telles que les réseaux privés virtuels de niveau 2 (ou Layer 2 virtual private network, ou L2VPN) ou de niveau 3 (L3VPN), ou tout autre réseau où l'on peut avoir deux procédures d'authentification et d'autorisation distinctes, une à l'accès, une dans le cœur de réseau.

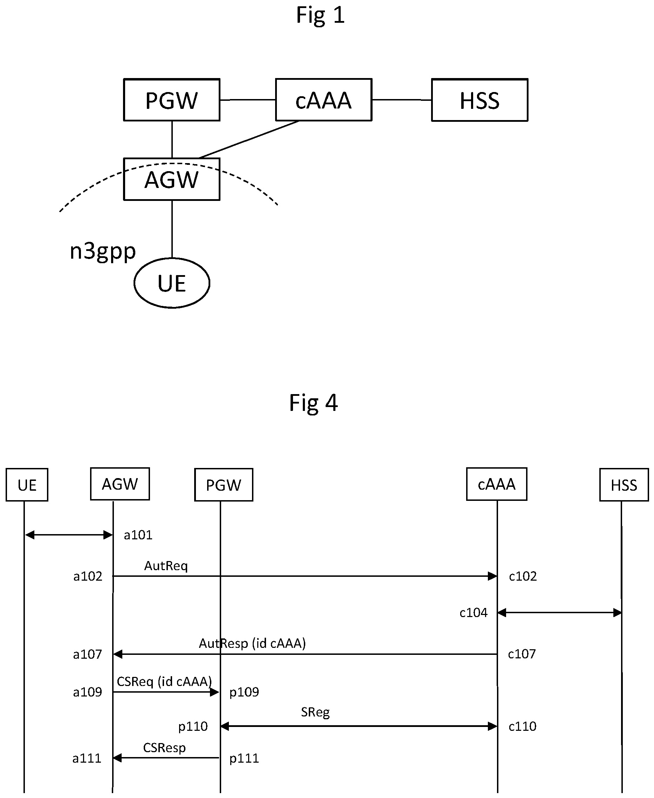

La **figure 1** présente de façon schématique une vue d'ensemble des éléments mettant en œuvre l'invention, selon un premier mode de réalisation.

Dans ce premier mode de réalisation, le terminal d'utilisateur UE n'est pas en situation d'itinérance. Le terminal UE est apte à se connecter à une passerelle d'accès AGW offrant un accès non-3GPP (noté n3gpp dans les figures) au cœur de réseau paquet d'un réseau 3GPP, ou "monde 3GPP". La passerelle d'accès AGW est connectée à un ou plusieurs serveurs d'authentification de type AAA. Dans le cas où il y a plusieurs serveurs d'authentification, le serveur cAAA à contacter pour le terminal UE est soit connu à l'avance de la passerelle AGW par configuration, soit il existe un mécanisme permettant la découverte dynamique du serveur cAAA en fonction du terminal UE et éventuellement en fonction de l'APN demandé par le terminal.

Après l'authentification et l'autorisation du terminal UE, la passerelle d'accès AGW peut émettre une requête vers la passerelle d'ancrage PGW pour l'établissement d'une connexion pour le terminal UE, l'identifiant permettant de contacter la passerelle d'ancrage PGW étant soit fourni par le serveur d'authentification cAAA, soit découvert dynamiquement par la passerelle d'accès AGW. Lors de l'établissement de cette connexion, la passerelle d'ancrage PGW s'enregistre auprès du serveur d'authentification cAAA grâce aux procédés d'autorisation, de connexion et d'enregistrement selon l'invention, où l'identifiant du serveur cAAA est fourni, en cascade, du serveur cAAA, à la passerelle AGW, à la passerelle PGW.

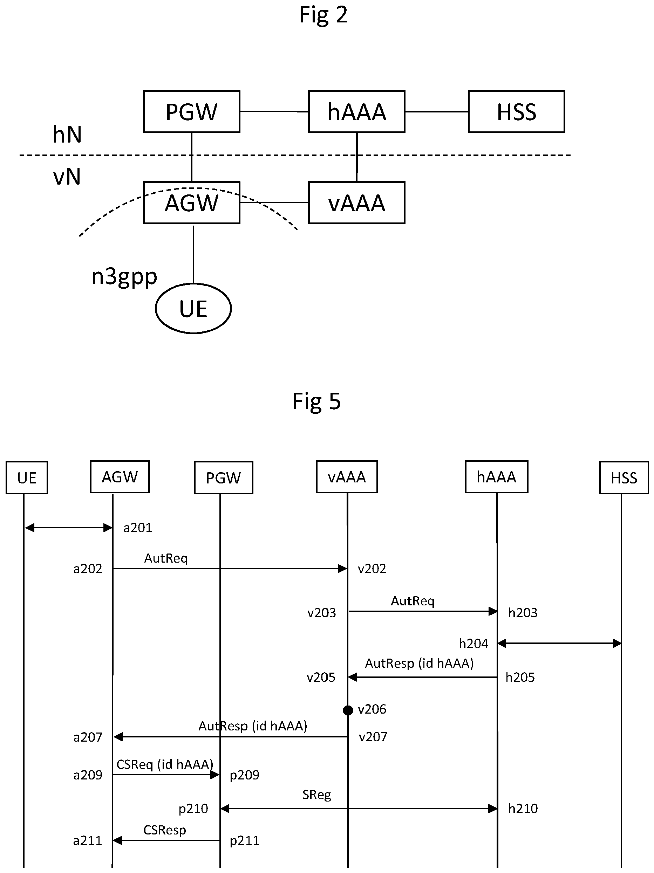

La **figure 2** présente de façon schématique une vue d'ensemble des éléments mettant en œuvre l'invention, selon un deuxième mode de réalisation.

Dans ce deuxième mode de réalisation, le terminal d'utilisateur UE est en situation d'itinérance et sa passerelle d'ancrage PGW doit être dans le réseau 3GPP de domicile, noté hN.

Le terminal UE est apte à se connecter à une passerelle d'accès AGW offrant un accès non-3GPP au monde 3GPP. La passerelle d'accès AGW est connectée à un ou plusieurs serveurs d'authentification de type AAA en charge de gérer les demandes de connexion aux passerelles d'accès AGW situées dans le réseau 3GPP visité, vN. Dans ce mode, le serveur d'authentification vAAA à contacter pour autoriser les connexions des terminaux UE en itinérance dans le réseau visité vN est soit connu à l'avance de la passerelle AGW par configuration ou découvert dynamiquement.

Lors de l'authentification du terminal UE itinérant, le serveur d'authentification vAAA sollicité par la passerelle d'accès AGW ne connait pas l'utilisateur du terminal UE et doit donc s'adresser au serveur d'authentification hAAA qui peut effectuer l'authentification du terminal UE. Le routage de la requête entre le réseau visité vN du serveur d'authentification vAAA et le réseau domicile hN du serveur d'authentification hAAA est effectué sur la base du nom de domaine contenu dans l'identifiant de l'utilisateur du terminal UE ou par une méthode alternative permettant de découvrir le nom de domaine à partir de cet identifiant (par exemple une table de correspondance), identifiant dans le cas présent le réseau domicile hN, puis la requête est transmise à un des serveurs d'authentification hAAA déployés dans le réseau domicile hN. Le serveur d'authentification hAAA contacte le HSS dans le réseau domicile hN pour récupérer les informations nécessaires à l'authentification et l'autorisation d'accès du terminal UE dans le réseau visité vN.

Le serveur d'authentification vAAA peut également recevoir du serveur d'authentification hAAA l'identifiant de la passerelle d'ancrage PGW qui est dans le réseau domicile hN. S'il n'est pas fourni, le serveur d'authentification vAAA reçoit du serveur d'authentification hAAA une information indiquant que la passerelle d'ancrage PGW doit être allouée dans le réseau domicile hN. L'identifiant de la passerelle d'ancrage PGW à contacter dans le réseau domicile hN est découvert de manière dynamique par la passerelle d'accès AGW. La réponse du serveur d'authentification hAAA, relayée par le serveur d'authentification vAAA, et reçue par la passerelle d'accès AGW permet à cette dernière de découvrir l'identifiant du serveur d'authentification hAAA en charge de la session d'accès pour le terminal UE en itinérance.

La passerelle d'accès AGW peut ainsi émettre une requête vers la passerelle d'ancrage PGW pour une connexion pour le terminal UE. Lors de l'établissement de cette connexion, la passerelle d'ancrage PGW s'enregistre auprès du serveur d'authentification hAAA grâce aux procédés d'autorisation, de connexion et d'enregistrement selon l'invention, où l'identifiant du serveur d'authentification hAAA est fourni, en cascade, du serveur hAAA, au serveur vAAA, à la passerelle AGW, à la passerelle PGW.

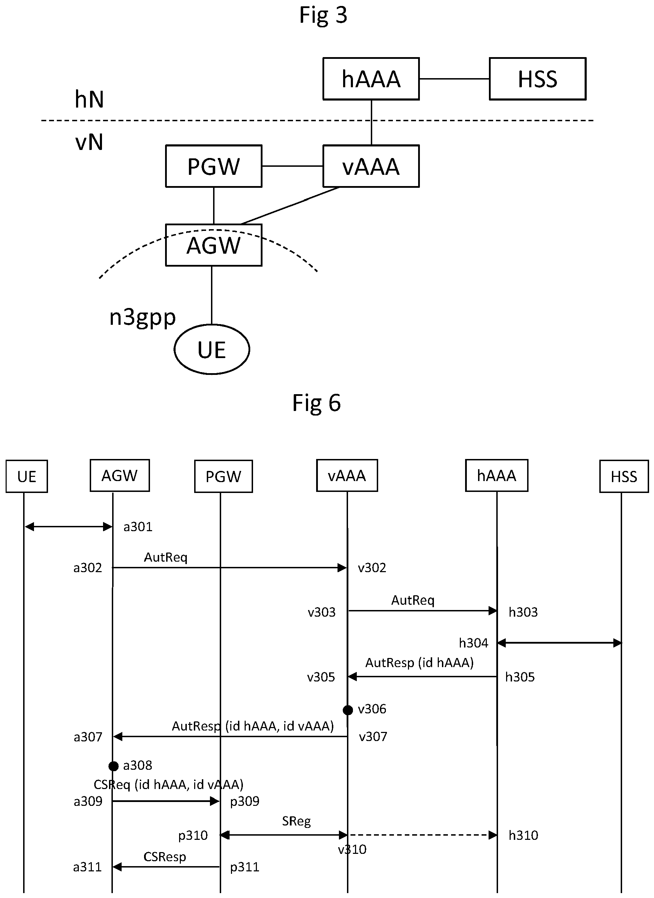

La **figure 3** présente de façon schématique une vue d'ensemble des éléments mettant en œuvre l'invention, selon un troisième mode de réalisation.

Dans ce troisième mode de réalisation, le terminal d'utilisateur UE est aussi en situation d'itinérance et sa passerelle d'ancrage PGW peut être dans le réseau 3GPP visité, noté vN.

Le terminal UE est apte à se connecter à une passerelle d'accès AGW offrant un accès non-3GPP (noté n3gpp) au monde 3GPP. La passerelle d'accès AGW est connectée à un ou plusieurs serveurs d'authentification de type AAA en charge de gérer les demandes de connexion aux passerelles d'accès AGW situées dans le réseau visité vN. Dans ce mode, le serveur vAAA à contacter pour autoriser les connexions des terminaux UE en itinérance dans le réseau visité vN est soit connu à l'avance de la passerelle AGW par configuration ou découvert dynamiquement.

Lors de l'authentification du terminal UE itinérant, le serveur d'authentification vAAA sollicité par la passerelle d'accès AGW ne connait pas l'utilisateur du terminal UE et doit donc s'adresser au serveur d'authentification hAAA qui peut effectuer l'authentification du terminal UE. Le routage de la requête entre le réseau visité vN du serveur d'authentification vAAA et le réseau domicile hN du serveur d'authentification hAAA est effectué sur la base du nom de domaine contenu dans l'identifiant de l'utilisateur du terminal UE ou par une méthode alternative permettant de découvrir le nom de domaine à partir de cet identifiant (par exemple une table de correspondance), identifiant dans le cas présent le réseau domicile hN, puis la requête est transmise à un des serveurs d'authentification hAAA déployés dans le réseau domicile hN. Le serveur d'authentification hAAA contacte le HSS dans le réseau domicile hN pour récupérer les informations nécessaires à l'authentification et l'autorisation d'accès du terminal UE dans le réseau visité vN.

A la différence du deuxième mode de réalisation, le serveur d'authentification vAAA ne reçoit pas du serveur d'authentification hAAA l'identifiant d'une passerelle d'ancrage PGW qui est dans le réseau domicile hN, mais une information indiquant que la passerelle d'ancrage PGW peut être allouée dans le réseau visité vN. L'identifiant de la passerelle d'ancrage PGW à contacter dans le réseau visité vN est découverte de manière dynamique par la passerelle d'accès AGW. La réponse du serveur d'authentification hAAA, relayée par le serveur d'authentification vAAA, et reçue par la passerelle d'accès AGW permet à cette dernière de découvrir l'identifiant du serveur d'authentification hAAA en charge de la session d'accès pour le terminal UE en itinérance.

La passerelle d'accès AGW peut ainsi émettre une requête vers la passerelle d'ancrage PGW pour une connexion pour le terminal UE. Lors de l'établissement de cette connexion, la passerelle d'ancrage PGW s'enregistre auprès du serveur d'authentification hAAA en passant par le serveur d'authentification vAAA, grâce aux procédés d'autorisation, de connexion et d'enregistrement selon l'invention, où l'identifiant du serveur d'authentification hAAA est fourni, en cascade, du serveur d'authentification hAAA, au serveur d'authentification vAAA, à la passerelle AGW, à la passerelle PGW, et où de plus, l'identifiant du serveur d'authentification vAAA est fourni, en cascade, du serveur d'authentification vAAA, à la passerelle AGW, à la passerelle PGW.

Les échanges de messages entre les différentes entités mentionnées ci-dessus sont maintenant détaillés, pour les trois modes de réalisation.

La **figure 4** présente les étapes des procédés d'autorisation, de connexion et d'enregistrement, selon un premier mode de réalisation de l'invention.

Lors d'une étape a101 connue, le terminal UE d'un utilisateur User s'attache à la passerelle d'accès AGW, fournissant par exemple un accès non-3GPP, tel que WiFi, à un service d'un réseau 3GPP tel que la voix téléphonique. Lors de cette étape l'utilisateur User est authentifié par un serveur d'authentification.

Lors d'une étape a102 connue, la passerelle d'accès AGW émet une requête d'autorisation AutReq pour le terminal UE, comprenant un identifiant Userld de l'utilisateur User et la réponse à la demande d'authentification envoyée par le terminal UE, vers un serveur d'authentification cAAA de type AAA préalablement associé à la passerelle AGW, qui est le même serveur qui a envoyé les informations nécessaires à l'authentification de l'utilisateur User lors de l'étape a101.

Lors d'une étape c102 connue, le serveur d'authentification cAAA reçoit la requête d'autorisation AutReq.

Lors d'une étape c104 connue, le serveur d'authentification cAAA consulte le serveur HSS qui lui est associé, et obtient les paramètres d'autorisation pour l'attachement du terminal UE, qui indiquent notamment si la passerelle d'ancrage PGW peut être sélectionnée dynamiquement par la passerelle d'accès AGW et si oui, si cette passerelle d'ancrage peut être sélectionnée dans un réseau visité ou doit être sélectionnée dans le réseau domicile.

Lors d'une étape c107, le serveur d'authentification cAAA émet une réponse d'autorisation AutResp vers la passerelle d'accès AGW, comprenant son identifiant unique, en plus des informations connues selon la technique antérieure. Cet identifiant unique permet de distinguer de façon unique un serveur de type AAA, ou une connexion vers celui-ci.

Lors d'une étape a107, la passerelle d'accès AGW reçoit la réponse d'autorisation AutResp.

Lors d'une étape a109, la passerelle d'accès AGW émet une requête de connexion CSReq pour le terminal UE vers la passerelle d'ancrage PGW sélectionnée pour permettre l'accès du terminal au réseau de commutation par paquets demandé par l'utilisateur, à l'aide d'un identifiant APN dans la demande d'accès, tel que par exemple l'Internet ou IMS. L'identifiant APN détermine une liste de serveurs d'ancrage PGW dans laquelle la passerelle d'accès AGW peut choisir. Cette requête de connexion CSReq comprend l'identifiant unique du serveur d'authentification cAAA qui a authentifié l'utilisateur User du terminal UE.

Lors d'une étape p109, la passerelle d'ancrage PGW reçoit la requête de connexion CSReq.

Lors d'une étape p110, à l'aide de l'identifiant unique du serveur d'authentification cAAA, la passerelle d'ancrage PGW s'enregistre auprès de lui. Cet enregistrement sert, de façon connue, à signaler au serveur d'authentification cAAA l'identité de la passerelle d'ancrage PGW en charge de la connexion pour le terminal UE avec le réseau de commutation par paquets pour forcer la resélection de cette même passerelle d'ancrage PGW en cas de mobilité du terminal, par exemple entre accès non-3GPP et accès 3GPP ou réciproquement. Cela peut également servir à des fins de comptage entre autres.

Si l'enregistrement est autorisé par le serveur d'authentification cAAA, la passerelle d'ancrage PGW émet, lors d'une étape p111 connue, vers la passerelle d'accès AGW, une réponse de connexion CSResp, que celle-ci reçoit lors d'une étape a111 également connue. La connexion entre le terminal UE et le réseau de commutation par paquets est alors établie.

La **figure 5** présente les étapes des procédés d'authentification, de connexion et d'enregistrement, selon un deuxième mode de réalisation de l'invention.

Lors d'une étape a201 connue, le terminal UE d'un utilisateur User s'attache à la passerelle d'accès AGW d'un réseau visité vN, fournissant par exemple un accès non-3GPP, tel que WiFi, à un service d'un réseau 3GPP tel que la voix téléphonique. Lors de cette étape l'utilisateur User est authentifié par un serveur d'authentification.

Lors d'une étape a202 connue, la passerelle d'accès AGW émet une requête d'autorisation AuthReq pour le terminal UE, comprenant un identifiant Userld de l'utilisateur User et la réponse à la demande d'authentification envoyée par le terminal UE, vers un serveur d'authentification vAAA de type AAA dans le réseau visité vN, préalablement associé à la passerelle AGW.

Lors d'une étape v202 connue, le serveur d'authentification vAAA reçoit la requête d'autorisation AutReq.

Lors d'une étape v203 connue, le serveur d'authentification vAAA transfère la requête d'autorisation AutReq vers un serveur d'authentification hAAA situé dans le réseau de domicile hN du terminal UE, qui est le même serveur qui a envoyé les informations nécessaires à l'authentification de l'utilisateur User lors de l'étape a201.

Lors d'une étape h203 connue, le serveur d'authentification hAAA reçoit la requête d'autorisation AutReq.

Lors d'une étape h204 connue, le serveur d'authentification hAAA consulte le serveur HSS qui lui est associé, et obtient les paramètres d'autorisation pour l'attachement du terminal UE, qui indiquent notamment si la passerelle d'ancrage PGW peut être sélectionnée dynamiquement par la passerelle d'accès AGW et si oui, si cette passerelle d'ancrage peut être sélectionnée dans un réseau visité ou doit être sélectionnée dans le réseau domicile.

Lors d'une étape h205, le serveur d'authentification hAAA émet vers le serveur d'authentification vAAA une réponse d'autorisation AutResp, comprenant l'identifiant unique du serveur d'authentification hAAA, en plus des informations connues selon la technique antérieure. Cet identifiant unique permet de distinguer de façon unique un serveur de type AAA, ou une connexion vers celui-ci.

Lors d'une étape v205, le serveur d'authentification vAAA reçoit la réponse d'autorisation AutResp.

Lors d'une étape v206, le serveur d'authentification vAAA obtient une information relative à une obligation d'allouer la passerelle d'ancrage PGW dans le réseau de domicile hN.

Lors d'une étape v207, le serveur d'authentification vAAA transfère la réponse d'autorisation AutResp vers la passerelle d'accès AGW, comprenant l'identifiant unique du serveur d'authentification hAAA.

Lors d'une étape a207, la passerelle d'accès AGW reçoit la réponse d'autorisation AutResp.

Lors d'une étape a209, la passerelle d'accès AGW émet une requête de connexion CSReq pour le terminal UE vers la passerelle d'ancrage PGW sélectionnée dans son réseau de domicile hN pour permettre l'accès du terminal au réseau de commutation par paquets demandé par l'utilisateur, à l'aide d'un identifiant APN dans la demande d'accès, tel que par exemple l'Internet ou IMS. L'identifiant APN détermine une liste de serveurs d'ancrage PGW dans laquelle la passerelle d'accès AGW peut choisir. Cette requête de connexion CSReq comprend l'identifiant unique du serveur d'authentification hAAA qui a authentifié l'utilisateur User du terminal UE.

Lors d'une étape p209, la passerelle d'ancrage PGW reçoit la requête de connexion CSReq.

Lors d'une étape p210, à l'aide de l'identifiant unique du serveur d'authentification hAAA, la passerelle d'ancrage PGW s'enregistre auprès de lui. Cet enregistrement sert, de façon connue, à signaler au serveur d'authentification hAAA l'identité de la passerelle d'ancrage PGW en charge de la connexion pour le terminal UE avec le réseau de commutation par paquets pour forcer la resélection de cette même passerelle d'ancrage PGW en cas de mobilité du terminal, par exemple entre accès non-3GPP et accès 3GPP ou réciproquement. Cela peut également servir à des fins de comptage entre autres.

Si l'enregistrement est autorisé par le serveur d'authentification hAAA, la passerelle d'ancrage PGW émet, lors d'une étape p211 connue, vers la passerelle d'accès AGW, une réponse de connexion CSResp, que celle-ci reçoit lors d'une étape a211 également connue. La connexion entre le terminal UE et le réseau de commutation par paquets est alors établie.

La **figure 6** présente les étapes des procédés d'authentification, de connexion et d'enregistrement, selon un troisième mode de réalisation de l'invention.

Les étapes entre l'étape a301 et l'étape h303 ainsi que leur déroulement chronologique sont les même que pour les étapes a201 à h203 décrites en référence à la figure 5, et ne seront pas décrites à nouveau.

Lors d'une étape h304 connue, le serveur d'authentification hAAA consulte le serveur HSS qui lui est associé, et obtient les paramètres d'autorisation pour l'attachement du terminal UE, qui indiquent notamment si la passerelle d'ancrage PGW peut être sélectionnée dynamiquement par la passerelle d'accès AGW et si oui, si cette passerelle d'ancrage peut être sélectionnée dans un réseau visité ou doit être sélectionnée dans le réseau domicile.

Lors d'une étape h305, le serveur d'authentification hAAA émet vers le serveur d'authentification vAAA une réponse d'autorisation AutResp, comprenant l'identifiant unique du serveur d'authentification hAAA, en plus des informations connues selon la technique antérieure, qui peuvent comprendre une information relative à une autorisation d'allouer une passerelle d'ancrage PGW située dans le réseau visité vN, si le serveur d'authentification hAAA a obtenu une telle autorisation. L'identifiant unique permet de distinguer de façon unique un serveur de type AAA, ou une connexion vers celui-ci.

Lors d'une étape v305, le serveur d'authentification vAAA reçoit la réponse d'autorisation AutResp.

Lors d'une étape v306, le serveur d'authentification vAAA obtient l'information relative à l'autorisation d'allouer une passerelle d'ancrage PGW située dans le réseau visité vN. Il l'obtient soit grâce à l'information explicite comprise dans la réponse d'autorisation AutResp, soit, quand cette information n'est pas comprise dans la réponse d'autorisation AutResp, par un autre moyen tel que par l'application d'une politique configurée par l'opérateur du réseau visité vN dans le serveur d'authentification vAAA.

Lors d'une étape v307, le serveur d'authentification vAAA transfère la réponse d'autorisation AutResp vers la passerelle d'accès AGW, comprenant l'identifiant unique du serveur d'authentification hAAA et l'information relative à l'autorisation d'allouer une passerelle d'ancrage PGW située dans le réseau visité vN, en y ajoutant l'identifiant unique du serveur d'authentification vAAA, en raison de l'indication obtenue lors de l'étape v306.

Lors d'une étape a307, la passerelle d'accès AGW reçoit la réponse d'autorisation AutResp.

La présence dans la réponse d'autorisation AutResp de l'information relative à l'autorisation d'allouer une passerelle d'ancrage PGW située dans le réseau visité vN déclenche une étape a308, où la passerelle d'accès AGW sélectionne donc, soit une passerelle d'ancrage dans le réseau visité vN, soit une passerelle d'ancrage prédéterminée dans le réseau de domicile hN du terminal.

Si la passerelle d'accès AGW ne sélectionne pas la passerelle d'ancrage dans le réseau visité vN, les étapes suivant l'étape a308 sont les mêmes que dans le deuxième mode de réalisation décrit en référence à la figure 5, à partir de l'étape a209, et ne seront pas présentées à nouveau.

Sinon, lors d'une étape a309, la passerelle d'accès AGW émet une requête de connexion CSReq pour le terminal UE vers la passerelle d'ancrage PGW sélectionnée dans son réseau visité vN pour permettre l'accès du terminal au réseau de commutation par paquets demandé par l'utilisateur, à l'aide d'un identifiant APN dans la demande d'accès, tel que par exemple l'Internet ou IMS. L'identifiant APN détermine une liste de serveurs d'ancrage PGW dans laquelle la passerelle d'accès AGW peut choisir. Cette requête de connexion CSReq comprend l'identifiant unique du serveur d'authentification hAAA qui a authentifié l'utilisateur User du terminal UE, ainsi que l'identifiant unique du serveur d'authentification vAAA.

Lors d'une étape p309, la passerelle d'ancrage PGW reçoit la requête de connexion CSReq.

Lors d'une étape p310, à l'aide des deux identifiants uniques des serveurs d'authentification vAAA et hAAA, la passerelle d'ancrage PGW s'enregistre auprès du serveur d'authentification hAAA en faisant router la requête d'enregistrement par le serveur d'authentification vAAA. Cet enregistrement sert, de façon connue, à signaler à la fois au serveur d'authentification hAAA et au serveur d'authentification vAAA l'identité de la passerelle d'ancrage PGW en charge de la connexion pour le terminal UE avec le réseau de commutation par paquets, pour forcer la resélection de cette même passerelle d'ancrage PGW en cas de mobilité du terminal, par exemple entre accès non-3GPP et accès 3GPP ou réciproquement. Cela peut également servir à des fins de comptage entre autres.

Si l'enregistrement est autorisé par le serveur d'authentification hAAA, la passerelle d'ancrage PGW émet, lors d'une étape p311 connue, vers la passerelle d'accès AGW, une réponse de connexion CSResp, que celle-ci reçoit lors d'une étape a311 également connue. La connexion entre le terminal UE et le réseau de commutation par paquets est alors établie.

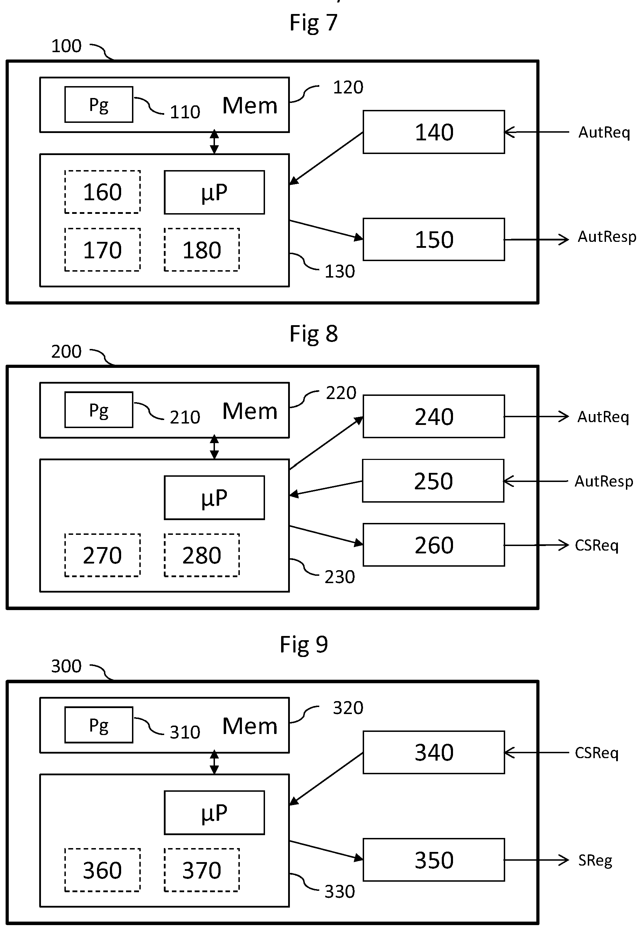

En relation avec la **figure 7**, on présente maintenant un exemple de structure d'un dispositif d'autorisation, selon un aspect de l'invention.

Le dispositif 100 d'autorisation met en œuvre le procédé d'autorisation, dont différents modes de réalisation viennent d'être décrits.

Un tel dispositif 100 peut être mis en œuvre dans un équipement spécialisé dans l'authentification, l'autorisation et le comptage, dit serveur de type AAA, utilisant un protocole d'échange de messages tel que Diameter. Il est mis en œuvre par exemple dans le serveur d'authentification cAAA ou vAAA.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé d'autorisation selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend les modules suivants :
- réception 140 d'une requête d'autorisation d'utilisateur AutReq en provenance d'une passerelle d'accès AGW, comprenant un identifiant de l'utilisateur,
- émission 150 d'une réponse d'autorisation AutResp à destination de la passerelle d'accès AGW, comprenant des paramètres d'autorisation de l'utilisateur, et un identifiant unique d'un serveur d'authentification ayant authentifié l'utilisateur cAAA ou hAAA.

Avantageusement, le dispositif 100 peut en outre comprendre les modules suivants, si le serveur d'authentification courant vAAA est dans un réseau visité par le terminal, et si l'utilisateur a été authentifié par un autre serveur d'authentification hAAA dans un réseau de domicile du terminal,
- transmission 160 de la requête d'autorisation AutReq vers l'autre serveur d'authentification hAAA,
- obtention 170 d'une information relative à une autorisation d'allouer une passerelle d'ancrage PGW située dans le réseau visité et destinée à connecter le terminal d'utilisateur au réseau de commutation par paquets,
- et inclusion 180 dans la réponse d'autorisation AutResp d'une adresse unique du serveur d'authentification courant vAAA.

En relation avec la **figure 8**, on présente maintenant un exemple de structure d'un dispositif de connexion, selon un aspect de l'invention.

Le dispositif 200 de connexion met en œuvre le procédé de connexion, dont différents modes de réalisation viennent d'être décrits.

Un tel dispositif 200 peut être mis en œuvre dans une passerelle d'accès donnant à un terminal d'utilisateur un accès non-3GPP à un réseau 3GPP.

Il est mis en œuvre par exemple dans la passerelle AGW.

Par exemple, le dispositif 200 comprend une unité de traitement 230, équipée par exemple d'un microprocesseur µP, et pilotée par un programme d'ordinateur 210, stocké dans une mémoire 220 et mettant en œuvre le procédé d'autorisation selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 200 comprend les modules suivants :
- émission 240 d'une requête d'autorisation d'utilisateur AutReq comprenant un identifiant de l'utilisateur, à destination d'un serveur d'authentification courant cAAA ou vAAA,
- réception 250 d'une réponse d'autorisation AutResp en provenance du serveur d'authentification courant cAAA ou vAAA, comprenant un identifiant unique du serveur d'authentification cAAA ou hAAA ayant authentifié l'utilisateur,
- émission 260 d'une requête de connexion CSReq vers la passerelle d'ancrage PGW, destinée à connecter le terminal UE au réseau de commutation par paquets, comprenant l'identifiant unique du serveur d'authentification cAAA ou hAAA ayant authentifié l'utilisateur.

Avantageusement, le dispositif 200 peut en outre comprendre les modules suivants, si le serveur d'authentification courant vAAA est dans un réseau visité par le terminal, et si l'utilisateur a été authentifié par un autre serveur d'authentification hAAA dans un réseau de domicile du terminal,
- si un paramètre d'autorisation relatif à la sélection d'une passerelle d'ancrage dans un réseau visité par le terminal est reçu dans la réponse d'autorisation AutResp, sélection 270 entre la passerelle d'ancrage vAAA dans le réseau visité par le terminal ou la passerelle d'ancrage hAAA dans le réseau de domicile du terminal,
- si la passerelle d'ancrage PGW est sélectionnée dans le réseau visité, inclusion 280 dans la réponse d'autorisation AutResp d'une adresse unique du serveur d'authentification courant vAAA.

En relation avec la **figure 9**, on présente maintenant un exemple de structure d'un dispositif d'enregistrement, selon un aspect de l'invention.

Le dispositif 300 d'enregistrement met en œuvre le procédé d'enregistrement, dont différents modes de réalisation viennent d'être décrits.

Un tel dispositif 300 peut être mis en œuvre dans une passerelle d'ancrage donnant à un réseau 3GPP un accès à un réseau de commutation par paquets.

Il est mis en œuvre par exemple dans la passerelle PGW.

Par exemple, le dispositif 300 comprend une unité de traitement 330, équipée par exemple d'un microprocesseur µP, et pilotée par un programme d'ordinateur 310, stocké dans une mémoire 320 et mettant en œuvre le procédé d'enregistrement selon l'invention. A l'initialisation, les instructions de code du programme d'ordinateur 310 sont par exemple chargées dans une mémoire RAM, avant d'être exécutées par le processeur de l'unité de traitement 330.

Un tel dispositif 300 comprend les modules suivants :
- réception 340 d'une requête de connexion CSReq pour le terminal, en provenance d'une passerelle d'accès AGW à laquelle est attaché le terminal, comprenant un identifiant unique du serveur d'authentification cAAA ou hAAA ayant préalablement authentifié l'utilisateur,
- émission 350 d'une requête d'enregistrement SReg vers le serveur d'authentification cAAA ou hAAA ayant préalablement authentifié l'utilisateur.

Avantageusement, le dispositif 300 peut en outre comprendre les modules suivants, si le serveur d'authentification courant vAAA est dans un réseau visité par le terminal, et si l'utilisateur a été authentifié par un autre serveur d'authentification hAAA dans un réseau de domicile du terminal, et si la passerelle d'ancrage PGW est dans le réseau visité
- obtention 360 dans la réponse d'autorisation AutResp d'une adresse unique du serveur d'authentification courant vAAA,
- routage 370 de la requête d'enregistrement émise SReg au travers du serveur d'authentification courant vAAA.

Les modules décrits en relation avec les figures 7, 8 et 9 peuvent être des modules matériels ou logiciels.

## Revendications

1. **Procédé** de connexion d'un terminal d'un utilisateur à une passerelle d'ancrage (PGW) connectée à un réseau de commutation par paquets, le procédé étant mis en œuvre par une passerelle d'accès (AGW) à laquelle est attaché le terminal (UE) et comprenant les étapes suivantes :
• émission (a102, a202, a302) d'une requête d'autorisation d'utilisateur comprenant un identifiant de l'utilisateur, à destination d'un serveur d'authentification courant (cAAA, vAAA),
• réception (a107, a207, a307) d'une réponse d'autorisation d'utilisateur en provenance du serveur d'authentification courant (cAAA, vAAA),
• émission (a109, a209, a309) d'une requête de connexion vers la passerelle d'ancrage (PGW), destinée à connecter le terminal (UE) au réseau de commutation par paquets,
le procédé étant **caractérisé en ce que** la réponse d'autorisation d'utilisateur reçue comprend un identifiant unique d'un serveur d'authentification (cAAA, hAAA) ayant authentifié l'utilisateur, et **en ce que** cet identifiant est compris dans la requête de connexion émise.

2. **Procédé** de connexion selon la revendication 1, où la réponse d'autorisation d'utilisateur reçue comprend en outre un identifiant unique du serveur d'authentification courant (vAAA), et où cet identifiant est aussi compris dans la requête de connexion émise.

3. **Procédé** de connexion selon la revendication 1, où la réponse d'autorisation d'utilisateur reçue comprend en outre un identifiant unique du serveur d'authentification courant (vAAA), et un paramètre d'autorisation relatif à la sélection d'une passerelle d'ancrage dans un réseau visité par le terminal, dont la réception déclenche une étape (a308) de sélection entre une passerelle d'ancrage dans un réseau (vN) visité par le terminal ou une passerelle d'ancrage dans un réseau (hN) de domicile du terminal, le serveur d'authentification courant étant dans le réseau visité et le serveur d'authentification ayant authentifié l'utilisateur étant dans le réseau de domicile.

4. **Procédé** de connexion selon la revendication 3, où la requête de connexion émise comprend en outre l'identifiant unique du serveur d'authentification courant (vAAA), si la passerelle d'ancrage (PGW) est sélectionnée dans le réseau visité (vN).

5. **Procédé** d'enregistrement d'une passerelle d'ancrage (PGW) destinée à connecter un terminal (UE) d'un utilisateur à un réseau de commutation par paquets, comprenant les étapes suivantes :
• réception (p109, p209, p309) d'une requête de connexion pour le terminal, en provenance d'une passerelle d'accès (AGW) à laquelle est attaché le terminal,
• émission (p110, p210, p310) d'une requête d'enregistrement vers un serveur d'authentification (cAAA, hAAA) ayant préalablement authentifié l'utilisateur,
le procédé étant **caractérisé en ce que** la requête de connexion reçue comprend un identifiant unique du serveur d'authentification (cAAA, hAAA) ayant préalablement authentifié l'utilisateur.

6. **Procédé** d'enregistrement selon la revendication précédente, où la passerelle d'accès (AGW) et la passerelle d'ancrage (PGW) sont dans un réseau visité (vN) par le terminal (UE), et où la requête de connexion reçue comprend en outre un identifiant unique d'un autre serveur d'authentification (vAAA) dans le réseau visité, au travers duquel la requête d'enregistrement émise est routée.

7. **Procédé** selon l'une des revendications précédentes, où un identifiant de serveur d'authentification (cAAA, vAAA, hAAA) utilise un format parmi les suivants :
• une adresse IP, éventuellement combinée à un numéro de port si plusieurs ports sont présents à cette adresse IP,
• un nom de réseau de type FQDN.

8. **Dispositif** de connexion d'un terminal d'un utilisateur à une passerelle d'ancrage (PGW) connectée à un réseau de commutation par paquets, le dispositif étant mis en œuvre par une passerelle d'accès (AGW) à laquelle est attaché le terminal (UE) et comprenant les modules suivants :
• émission (240) d'une requête d'autorisation d'utilisateur comprenant un identifiant de l'utilisateur, à destination d'un serveur d'authentification courant (cAAA, vAAA),
• réception (250) d'une réponse d'autorisation d'utilisateur en provenance du serveur d'authentification courant (cAAA, vAAA), comprenant un identifiant unique d'un serveur d'authentification (cAAA, hAAA) ayant authentifié l'utilisateur,
• émission (260) d'une requête de connexion vers la passerelle d'ancrage (PGW), destinée à connecter le terminal (UE) au réseau de commutation par paquets, comprenant l'identifiant unique du serveur d'authentification (cAAA, hAAA) ayant authentifié l'utilisateur.

9. **Dispositif** d'enregistrement d'une passerelle d'ancrage (PGW) destinée à connecter un terminal (UE) d'un utilisateur à un réseau de commutation par paquets, comprenant les modules suivants :
• réception (340) d'une requête de connexion pour le terminal, en provenance d'une passerelle d'accès (AGW) à laquelle est attaché le terminal, comprenant un identifiant unique du serveur d'authentification (cAAA, hAAA) ayant préalablement authentifié l'utilisateur,
• émission (350) d'une requête d'enregistrement vers le serveur d'authentification (cAAA, hAAA) ayant préalablement authentifié l'utilisateur.

10. **Système d'identification** de serveurs d'authentification comprenant un dispositif d'autorisation, un dispositif de connexion conforme à la revendication 8 et un dispositif d'enregistrement conforme à la revendication 9,
le dispositif d'autorisation d'un utilisateur authentifié d'un terminal de communications comprenant les modules suivants, le terminal (UE) étant destiné à se connecter à un réseau de commutation par paquets via une passerelle d'accès AGW dans un réseau courant à laquelle le terminal est attaché, le dispositif étant mis en œuvre par un serveur d'authentification courant (cAAA, vAAA) dans le réseau courant :
• réception (140) d'une requête d'autorisation d'utilisateur en provenance de la passerelle d'accès (AGW), comprenant un identifiant de l'utilisateur,
• émission (150) d'une réponse d'autorisation d'utilisateur à destination de la passerelle d'accès (AGW), comprenant des paramètres d'autorisation de l'utilisateur, et un identifiant unique d'un serveur d'authentification ayant authentifié l'utilisateur (hAAA).

11. **Programme d'ordinateur, caractérisé en ce qu'**il comprend des instructions pour la mise en œuvre des étapes du procédé de connexion selon la revendication 1, lorsque ce programme est exécuté par un processeur.

12. **Programme d'ordinateur, caractérisé en ce qu'**il comprend des instructions pour la mise en œuvre des étapes du procédé d'enregistrement selon la revendication 5, lorsque ce programme est exécuté par un processeur.

13. **Support d'enregistrement** lisible par une passerelle d'accès offrant un accès non-3GPP à un réseau 3GPP, sur lequel est enregistré le programme selon la revendication 11.

14. **Support d'enregistrement** lisible par une passerelle d'ancrage entre un réseau 3GPP et un réseau de commutation par paquets, sur lequel est enregistré le programme selon la revendication 12.

## Patentansprüche

1. Verfahren zur Verbindung eines Endgerätes eines Benutzers mit einem Verankerungsgateway (PGW), das mit einem Paketvermittlungsnetz verbunden ist, wobei das Verfahren von einem Zugangsgateway (AGW) durchgeführt wird, an welches das Endgerät (UE) angeschlossen ist, und die folgenden Schritte umfasst:
• Senden (a102, a202, a302) einer Benutzerautorisierungs-Anfrage, die eine Kennung des Benutzers umfasst, an einen aktuellen Authentifizierungsserver (cAAA, vAAA),
• Empfangen (a107, a207, a307) einer Benutzerautorisierungs-Antwort von dem aktuellen Authentifizierungsserver (cAAA, vAAA),
• Senden (a109, a209, a309) einer Verbindunganforderung an das Verankerungsgateway (PGW), das dazu bestimmt ist, das Endgerät (UE) mit dem Paketvermittlungsnetz zu verbinden,
wobei das Verfahren **dadurch gekennzeichnet ist, dass** die empfangene Benutzerautorisierungs-Antwort eine eindeutige Kennung eines Authentifizierungsservers (cAAA, hAAA) umfasst, der den Benutzer authentifiziert hat, und dadurch, dass diese Kennung in der gesendeten Verbindunganforderung enthalten ist.

2. Verfahren zur Verbindung nach Anspruch 1, wobei die empfangene Benutzerautorisierungs-Antwort außerdem eine eindeutige Kennung des aktuellen Authentifizierungsservers (vAAA) umfasst, und wobei diese Kennung ebenfalls in der gesendeten Verbindunganforderung enthalten ist.

3. Verfahren zur Verbindung nach Anspruch 1, wobei die empfangene Benutzerautorisierungs-Antwort außerdem eine eindeutige Kennung des aktuellen Authentifizierungsservers (vAAA) umfasst, und einen Autorisierungsparameter, der sich auf die Wahl eines Verankerungsgateway in einem von dem Endgerät besuchten Netz bezieht und dessen Empfang einen Schritt (a308) der Wahl zwischen einem Verankerungsgateway in einem von dem Endgerät besuchten Netz (vN) und einem Verankerungsgateway in einem Heimatnetz (hN) des Endgerätes auslöst, wobei der aktuelle Authentifizierungsserver sich in dem besuchten Netz befindet und der Authentifizierungsserver, der den Benutzer authentifiziert hat, sich in dem Heimatnetz befindet.

4. Verfahren zur Verbindung nach Anspruch 3, wobei die gesendete Verbindunganforderung außerdem die eindeutige Kennung des aktuellen Authentifizierungsservers (vAAA) umfasst, falls das Verankerungsgateway (PGW) in dem besuchten Netz (vN) ausgewählt wird.

5. Verfahren zur Registrierung eines Verankerungsgateway (PGW), das dazu bestimmt ist, ein Endgerät (UE) eines Benutzers mit einem Paketvermittlungsnetz zu verbinden, die folgenden Schritte umfassend:
• Empfangen (p109, p209, p309) einer Verbindungsanforderung für das Endgerät von einem Zugangsgateway (AGW), an welches das Endgerät angeschlossen ist,
• Senden (p110, p210, p310) einer Registrierungsanforderung an einen Authentifizierungsserver (cAAA, hAAA), der den Benutzer zuvor authentifiziert hat,
wobei das Verfahren **dadurch gekennzeichnet ist, dass** die empfangene Verbindungsanforderung eine eindeutige Kennung des Authentifizierungsservers (cAAA, hAAA) umfasst, der den Benutzer zuvor authentifiziert hat.

6. Verfahren zur Registrierung nach dem vorhergehenden Anspruch, wobei sich das Zugangsgateway (AGW) und das Verankerungsgateway (PGW) in einem von dem Endgerät (UE) besuchten Netz (vN) befinden und wobei die empfangene Verbindunganforderung außerdem eine eindeutige Kennung eines anderen Authentifizierungsservers (vAAA) im besuchten Netz umfasst, über welchen die gesendete Registrierungsanforderung geroutet wird.

7. Verfahren nach einem der vorhergehenden Ansprüche, wobei eine Kennung eines Authentifizierungsservers (cAAA, vAAA, hAAA) eines der folgenden Formate verwendet:
• eine IP-Adresse, eventuell kombiniert mit einer Portnummer, falls an dieser IP-Adresse mehrere Ports vorhanden sind,
• ein Netzname vom Typ FQDN.

8. Einrichtung zur Verbindung eines Endgerätes eines Benutzers mit einem Verankerungsgateway (PGW), das mit einem Paketvermittlungsnetz verbunden ist, wobei die Einrichtung von einem Zugangsgateway (AGW) eingesetzt wird, an welches das Endgerät (UE) angeschlossen ist, und die folgenden Module umfasst:
• Senden (240) einer Benutzerautorisierungs-Anfrage, die eine Kennung des Benutzers umfasst, an einen aktuellen Authentifizierungsserver (cAAA, vAAA),
• Empfang (250) einer Benutzerautorisierungs-Antwort von dem aktuellen Authentifizierungsserver (cAAA, vAAA), die eine eindeutige Kennung eines Authentifizierungsservers (cAAA, hAAA) umfasst, der den Benutzer authentifiziert hat,
• Senden (260) einer Verbindunganforderung an das Verankerungsgateway (PGW), das dazu bestimmt ist, das Endgerät (UE) mit dem Paketvermittlungsnetz zu verbinden, welche die eindeutige Kennung des Authentifizierungsservers (cAAA, hAAA) umfasst, der den Benutzer authentifiziert hat.

9. Einrichtung zur Registrierung eines Verankerungsgateway (PGW), das dazu bestimmt ist, ein Endgerät (UE) eines Benutzers mit einem Paketvermittlungsnetz zu verbinden, welche die folgenden Module umfasst:
• Empfang (340) einer Verbindungsanforderung für das Endgerät von einem Zugangsgateway (AGW), an welches das Endgerät angeschlossen ist, die eine eindeutige Kennung des Authentifizierungsservers (cAAA, hAAA) umfasst, der den Benutzer zuvor authentifiziert hat,
• Senden (350) einer Registrierungsanforderung an den Authentifizierungsserver (cAAA, hAAA), der den Benutzer zuvor authentifiziert hat.

10. System zur Identifizierung von Authentifizierungsservern, welches eine Einrichtung zur Autorisierung, eine Einrichtung zur Verbindung gemäß Anspruch 8 und eine Einrichtung zur Registrierung gemäß Anspruch 9 umfasst,
wobei die Einrichtung zur Autorisierung eines authentifizierten Benutzers eines Kommunikationsendgerätes die folgenden Module umfasst, wobei das Endgerät (UE) dazu bestimmt ist, sich mit einem Paketvermittlungsnetz über ein Zugangsgateway (AGW), an welches das Endgerät angeschlossen ist, in einem aktuellen Netz zu verbinden, wobei die Einrichtung von einem aktuellen Authentifizierungsserver (cAAA, vAAA) in dem aktuellen Netz eingesetzt wird:
• Empfang (140) einer Benutzerautorisierungs-Anfrage von dem Zugangsgateway (AGW), die eine Kennung des Benutzers umfasst,
• Senden (150) einer Benutzerautorisierungs-Antwort an das Zugangsgateway (AGW), die Autorisierungsparameter des Benutzers und eine eindeutige Kennung eines Authentifizierungsservers, der den Benutzer authentifiziert hat (hAAA), umfasst.

11. Computerprogramm, **dadurch gekennzeichnet, dass** es Anweisungen zur Ausführung der Schritte des Verfahrens zur Verbindung nach Anspruch 1, wenn dieses Programm von einem Prozessor ausgeführt wird, umfasst.

12. Computerprogramm, **dadurch gekennzeichnet, dass** es Anweisungen zur Ausführung der Schritte des Verfahrens zur Registrierung nach Anspruch 5, wenn dieses Programm von einem Prozessor ausgeführt wird, umfasst.

13. Aufzeichnungsmedium, das von einem Zugangsgateway, das einen Nicht-3GPP-Zugang zu einem 3GPP-Netz bietet, lesbar ist und auf welchem das Programm gemäß Anspruch 11 aufgezeichnet ist.

14. Aufzeichnungsmedium, das von einem Verankerungsgateway zwischen einem 3GPP-Netz und einem Paketvermittlungsnetz lesbar ist und auf welchem das Programm gemäß Anspruch 12 aufgezeichnet ist.

## Claims

1. **Method** for connecting a terminal of a user to an anchor gateway (PGW) connected to a packet switching network, the method being implemented by an access gateway (AGW) to which the terminal (UE) is attached and comprising the following steps:
• sending (a102, a202, a302) of a user authorization request comprising an identifier of the user, destined for a current authentication server (cAAA, vAAA),
• reception (a107, a207, a307) of a user authorization response originating from the current authentication server (cAAA, vAAA),
• sending (a109, a209, a309) of a connection request to the anchor gateway (PGW), intended to connect the terminal (UE) to the packet switching network,
the method being **characterized in that** the user authorization response received comprises a unique identifier of an authentication server (cAAA, hAAA) that authenticated the user, and **in that** this identifier is included in the connection request sent.

2. **Method** of connection according to Claim 1, where the user authorization response received furthermore comprises a unique identifier of the current authentication server (vAAA), and where this identifier is also included in the connection request sent.

3. **Method** of connection according to Claim 1, where the user authorization response received furthermore comprises a unique identifier of the current authentication server (vAAA), and an authorization parameter relating to the selection of an anchor gateway in a network visited by the terminal, reception of which triggers a step (a308) of selecting between an anchor gateway in a network (vN) visited by the terminal or an anchor gateway in a home network (hN) of the terminal, the current authentication server being in the visited network and the authentication server that authenticated the user being in the home network.

4. **Method** of connection according to Claim 3, where the connection request sent furthermore comprises the unique identifier of the current authentication server (vAAA), if the anchor gateway (PGW) is selected in the visited network (vN).

5. **Method** of registration of an anchor gateway (PGW) intended to connect a terminal (UE) of a user to a packet switching network, comprising the following steps:
• reception (p109, p209, p309) of a connection request in respect of the terminal, originating from an access gateway (AGW) to which the terminal is attached,
• sending (p110, p210, p310) of a registration request to an authentication server (cAAA, hAAA) that previously authenticated the user,
the method being **characterized in that** the connection request received comprises a unique identifier of the authentication server (cAAA, hAAA) that previously authenticated the user.

6. **Method** of registration according to the preceding claim, where the access gateway (AGW) and the anchor gateway (PGW) are in a network (vN) visited by the terminal (UE), and where the connection request received furthermore comprises a unique identifier of another authentication server (vAAA) in the visited network, through which the registration request sent is routed.

7. **Method** according to one of the preceding claims, where an authentication server identifier (cAAA, vAAA, hAAA) uses a format from among the following:
• an IP address, perhaps combined with a port number if several ports are present at this IP address,
• a network name of FQDN type.

8. **Device** for connecting a terminal of a user to an anchor gateway (PGW) connected to a packet switching network, the device being implemented by an access gateway (AGW) to which the terminal (UE) is attached and comprising the following modules:
• sending (240) of a user authorization request comprising an identifier of the user, destined for a current authentication server (cAAA, vAAA),
• reception (250) of a user authorization response originating from the current authentication server (cAAA, vAAA), comprising a unique identifier of an authentication server (cAAA, hAAA) that authenticated the user,
• sending (260) of a connection request to the anchor gateway (PGW), intended to connect the terminal (UE) to the packet switching network, comprising the unique identifier of the authentication server (cAAA, hAAA) that authenticated the user.

9. **Device** for registering an anchor gateway (PGW) intended to connect a terminal (UE) of a user to a packet switching network, comprising the following modules:
• reception (340) of a connection request in respect of the terminal, originating from an access gateway (AGW) to which the terminal is attached, comprising a unique identifier of the authentication server (cAAA, hAAA) that previously authenticated the user,
• sending (350) of a registration request to the authentication server (cAAA, hAAA) that previously authenticated the user.

10. **System for identifying** authentication servers comprising an authorization device, a connection device in accordance with Claim 8 and a registration device in accordance with Claim 9,
the device for authorizing an authenticated user of a communications terminal comprising the following modules, the terminal (UE) being intended to connect to a packet switching network via an access gateway AGW to which the terminal is attached in a current network,
the device being implemented by a current authentication server (cAAA, vAAA) in the current network:
• reception (140) of a user authorization request originating from the access gateway (AGW), comprising an identifier of the user,
• sending (150) of a user authorization response destined for the access gateway (AGW), comprising authorization parameters in respect of the user, and a unique identifier of an authentication server that authenticated the user (hAAA).

11. **Computer program, characterized in that** it comprises instructions for the implementation of the steps of the method of connection according to Claim 1, when this program is executed by a processor.

12. **Computer program, characterized in that** it comprises instructions for the implementation of the steps of the method of registration according to Claim 5, when this program is executed by a processor.

13. **Recording medium** readable by an access gateway offering non-3GPP access to a 3GPP network, on which the program according to Claim 11 is recorded.

14. **Recording medium** readable by an anchor gateway between a 3GPP network and a packet switching network, on which the program according to Claim 12 is recorded.
